# EUROPEAN PATENT APPLICATION

(11) **EP 1 514 705 A1**
(43) Date of publication of application: **16.03.2005**
(21) Application number: 04019740.2
(22) Date of filing: 19.08.2004
(51) Int. Cl.: B60G 21/055, F16F 9/53

(54) **Variable rate torsion control system for vehicle suspension**

(30) Priority: 09.09.2003 JP 2003316900
(71) Applicant: HONDA MOTOR CO., LTD., Tokyo (JP)
(72) Inventor: Kawakami, Hiroo, Wako-shi Saitama (JP)
(74) Representative: Herzog, Markus, Dipl.-Phys. Dr.

(57) **Abstract**

A torsion bar spring apparatus (1) is provided, which includes a first torsion bar member (5) having a constant spring rate and a second torsion bar member (6). The second torsion bar member is connected to the first torsion bar member and a spring rate of the second torsion bar member is adapted to be variable.

## Description

### BACKGROUND OF THE INVENTION

The present invention relates to a torsion bar spring apparatus, and more particularly, to a torsion bar spring apparatus which is mounted to a vehicle as a stabilizer.

It is known that a torsion bar with an actuator has been used for a stabilizer of a vehicle. For example, Japanese Published Patent Applications H07-40731 and S61-24609 disclose related arts. The stabilizer has a rod-like torsion bar and a hydraulic rotary actuator which is able to provide the torsion bar with torsional force in both forward and backward directions. When torsional force is exerted on the torsion bar as a result of rolling of the vehicle during a turn, the stabilizer applies reverse and resistive torsional force to the torsion bar, using the hydraulic rotary actuator. In this way, the rolling of the vehicle is restrained by the torsion bar which is supplied with the reverse torsional force.

However, it is required for the stabilizer that the hydraulic rotary actuator is controlled so that the reverse torsional force supplied to the torsion bar is actively cancelled when the vehicle starts straight traveling. This invites a drawback that control of the stabilizer is complicated.

In addition, the stabilizer requires a reservoir for working oil, pipes through which the working oil flows to the hydraulic rotary actuator, and an oil pressure generator such as a hydraulic pump for applying a predetermined pressure so as to transfer the working oil. This also brings about a drawback that a large space is required to mount the oil pressure generator to the vehicle. Furthermore, this results in another drawback that mounting of the oil pressure generator leads to an increase in the weight of the vehicle, a deterioration in mileage and an increase in cost.

### SUMMARY OF THE INVENTION

The present invention seeks to provide a torsion bar spring apparatus, which is able not only to easily control a stabilizer but also to contribute to an increase in mileage and a reduction in cost.

The inventor has discovered that a torsion bar spring apparatus which is able to vary its spring rate overcomes the drawbacks described above.

It is an aspect of the present invention to provide a torsion bar spring apparatus, which includes a first torsion bar member having a constant spring rate and a second torsion bar member. The second torsion bar member is connected to the first torsion bar member and a spring rate of the second torsion bar member is adapted to be variable.

When a vehicle rolls during a turn, torsional force acts on the first and second torsion bar members of the torsion bar spring apparatus described above, which is mounted to the vehicle as a stabilizer. Because the spring rate of the second torsion bar member is adapted to be variable, it is possible to adjust its stiffness according to centrifugal force acting on the vehicle. In this way, when the vehicle makes a turn, rolling of the vehicle is restrained as a result of an increase in the spring rate of the second torsion bar member.

When the vehicle proceeds to straight traveling after completion of the turn, the torsion bar spring apparatus is able to return to its original position as a result of disappearance of the torsional force. Therefore, the torsion bar spring apparatus utilized as a stabilizer does not require control that actively cancels the reverse torsional force, different from a conventional stabilizer which has a hydraulic rotary actuator. Therefore, the torsion bar spring apparatus according to the present invention provides a stabilizer which can be easily controlled.

Furthermore, because a stabilizer employing the torsion bar spring apparatus has the second torsion bar member having a variable spring rate, it does not require an oil pressure generator which exerts reverse torsional force so as to execute the control described above. Because the torsion bar spring apparatus according to the present invention does not sacrifice the weight of vehicle, it allows a better mileage. Also the torsion bar spring apparatus enables a reduction in cost as a result of dispensing with the oil pressure generator.

It is another aspect of the present invention to provide a torsion bar spring apparatus, whose first torsion bar member includes a rod-like torsion bar spring and whose second torsion bar member includes a casing, a plate-like torsion bar spring, a magnetic fluid and an excitation device. Description is briefly given of each component below. The casing has a hollow section. The plate-like torsion bar spring is inserted into the hollow section and extends thereinto, and one end of the plate-like torsion bar spring is connected to the rod-like torsion bar spring. The magnetic fluid is charged in the hollow section. The excitation device excites the magnetic fluid.

The torsion bar spring apparatus described above has the rod-like torsion bar spring and the plate-like torsion bar spring which are integrally connected to each other. When torsional force is exerted on the torsion bar spring apparatus while the magnetic fluid is not excited, the plate-like torsion bar spring is twisted in the hollow section of the casing without effect of the magnetic fluid, because the magnetic fluid keeps liquidity. Under these conditions, the torsion bar spring apparatus, which has the integrated rod-like and plate-like torsion bar springs, is able to retain a constant spring rate.

On the other hand, when the magnetic fluid is excited by the excitation device, the magnetic fluid charged in the hollow section hardens around the plate-like torsion bar spring. Accordingly, the spring rate of the apparatus increases as a result of an increase in the spring rate of the second torsion bar member, which includes the plate-like torsion bar spring.

It is still another aspect of the present invention to provide a torsion bar spring apparatus, in which an excitation device comprises a plurality of coils and the coils are disposed around a casing in a longitudinal direction of a plate-like torsion bar spring extending into a hollow section.

The excitation device of the apparatus described above has the plural coils. When each coil is supplied with current, the magnetic fluid is excited and hardened. Because the coils are disposed around the casing in the longitudinal direction of the plate-like torsion bar spring, it is possible to control a range of hardened magnetic fluid in the hollow section by independently supplying the coils with current. As a result, the torsion bar spring apparatus, which controls this range, is able to gradually increase a spring rate.

Therefore, the apparatus according to the present invention is able to control rolling of the vehicle taking into account the balance in terms of comfortableness, because it is able to gradually increase the spring rate.

It is yet another aspect of the present invention to provide a torsion bar spring apparatus, which includes a casing, a plate-like torsion bar spring, an arm member, a magnetic fluid and an excitation device. Brief description is given of each component below. The casing has a hollow section. The plate-like torsion bar spring is inserted into the hollow section and extends thereinto. The arm member is attached to one end of the plate-like torsion bar spring so that a plane of the arm member intersects a plane of the plate-like torsion bar spring. The magnetic fluid is charged in the hollow section. The excitation device excites the magnetic fluid.

When torsional force is exerted on the plate-like torsion bar spring through the arm member while the magnetic fluid is not excited, the plate-like torsion bar spring is twisted in the hollow section of the casing without effect of the magnetic fluid, because the magnetic fluid keeps liquidity.

On the other hand, when the magnetic fluid is excited by the excitation device, the magnetic fluid charged in the hollow section hardens around the plate-like torsion bar spring. As a result, the spring rate of the plate-like torsion bar spring increases. Because the torsion bar spring apparatus can be applied to a mechanism, for example, which receives vertical movement with an arm member, versatility of its application can be enhanced.

### BRIEF DESCRIPTION OF THE DRAWINGS

FIG.1 is a schematic diagram illustrating a vehicle to which a torsion bar spring apparatus according to the present invention is mounted as a stabilizer.
FIG.2 is a perspective view showing a torsion bar spring apparatus according to the present invention.
FIG.3A is a sectional view taken along line 3A - 3A as shown in FIG.2.
FIG.3B is a sectional view taken along line 3B - 3B as shown in FIG.3A.
FIG.4 is a perspective view illustrating excitation of a magnetic fluid in a second torsion bar member of a torsion bar spring apparatus according to the present invention.
FIG.5 is a perspective view illustrating deformation of a plate-like torsion bar spring to which torsional force is applied.
FIG.6A is a graph showing the relationship between force applied to an end portion and its displacement, when force acting in an upward direction X (see FIG.2) is exerted on the end portion (see FIG.2) of a torsion bar spring apparatus according to the present invention.
FIG.6B is a schematic diagram illustrating a plate-like torsion bar spring when it is on a turning point in FIG.6A.
FIG.7 is a perspective view illustrating another torsion bar spring apparatus according to the present invention.

### DESCRIPTION OF THE PREFERRED EMBODIMENTS

Embodiments of the present invention are now described with reference to the accompanying drawings.

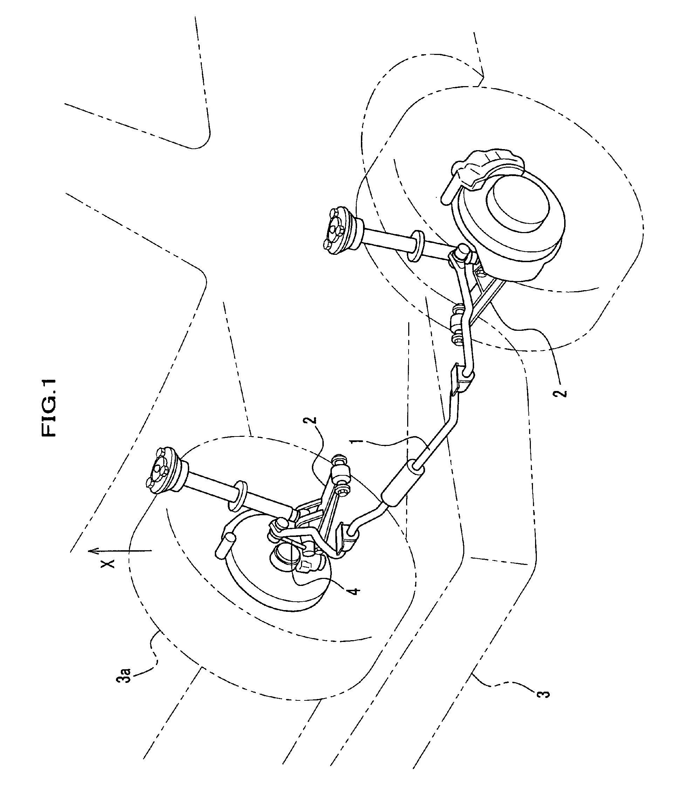

As shown in FIG.1, a torsion bar spring apparatus 1 is attached to right and left lower arms 2 of a vehicle 3 through link rods 4. The torsion bar spring apparatus 1, which serves as a stabilizer for the vehicle 3, controls its rolling during a turn.

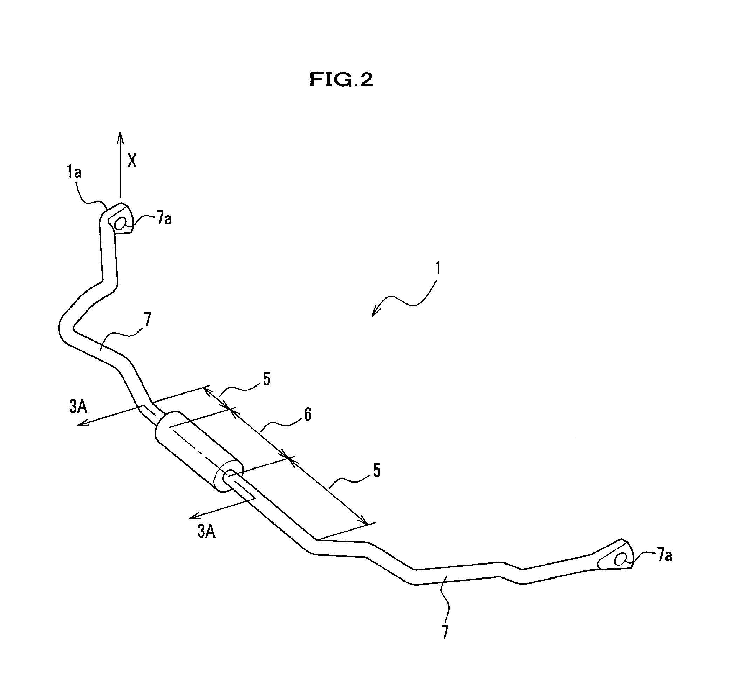

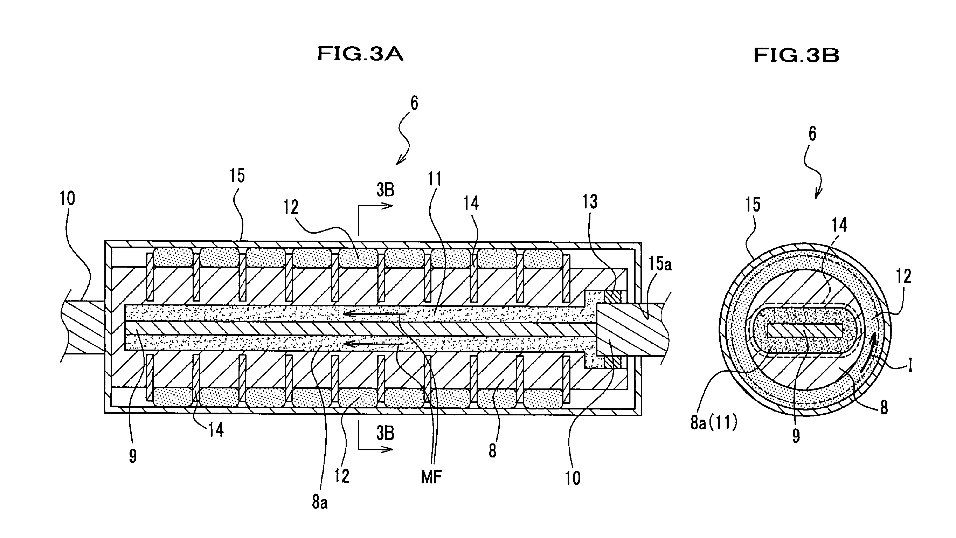

As shown in FIG.2, the torsion bar spring apparatus 1 includes a pair of first torsion bar members 5 made of rod-like torsion bar springs 10 (see FIG.3A) and a second torsion bar member 6 which is connected to the first torsion bar members 5. The first torsion bar members 5 are disposed on right and left sides of the second torsion bar member 6, interposing the second torsion bar member 6. Support members 7, which have the same diameter and material as those of a first torsion bar member 5, are connected to the first torsion bar members 5. Each support member 7 has a hole 7a at its end, through which a link rod 4 (see FIG.1) and a bolt are secured.

As shown in FIGS.3A and 3B, the second torsion bar member 6 includes a casing 8, a plate-like torsion bar spring 9, a magnetic fluid 11 and coils 12. In this connection, the coils 12 refer to "excitation device" in the appended claims.

The casing 8, which is a cylindrical member made of non-magnetic material, has a hollow section 8a which extends in a longitudinal direction of the casing 8. Into the hollow section 8a, which has an opening at one end of the casing 8, the end of a rod-like torsion bar spring 10 is rotatably inserted through the opening.

The plate-like torsion bar spring 9 is inserted into the hollow section 8a of the casing 8. The magnetic fluid 11 is charged in the hollow section 8a. A seal member 13 is disposed between the casing 8 and the rod-like torsion bar spring 10 near the opening of the hollow section 8a so that the magnetic fluid 11 does not leak from the hollow section 8a.

One end of the plate-like torsion bar spring 9 is connected to one end of the rod-like torsion bar spring 10 which is inserted into the hollow section 8a. And the other end of the plate-like torsion bar spring 9, which extends into the hollow section 8a, is connected to a wall of the hollow section 8a, namely the casing 8.

The magnetic fluid 11 has characteristics that it not only has fluidity while it is not excited but also gets hardened when it is excited. A combination of iron carbonyl particles and silicone oil is named as an example for the magnetic fluid 11.

The coils 12 are disposed around the casing 8 and electrically connected to a power supply (not shown). When current is supplied to a coil 12, it induces magnetic flux MF in an axial direction of the cylindrical casing 8. In this way, the magnetic fluid 11 is excited by this magnetic flux MF. The plural coils 12 are disposed in a longitudinal direction of the hollow section 8a of the casing 8. Each coil 12 is sandwiched between a pair of separators 14 both sides.

A separator 14 is a plate member which is substantially like a ring and made of magnetic material. A plurality of separators 14 is disposed in an axial direction of the cylindrical casing 8. Radially outer portion of the pair of separators 14 sandwiches the coil 12 and their radially inner portion confronts the magnetic fluid 11 charged in the hollow section 8a. The casing 8, to which the coils 12 and the separators 14 are attached, is brought into a container 15 and secured to it. The container 15 has an opening 15a at one end so as to guide one rod-like torsion bar spring 10 into it. Through the opening 15a, the rod-like torsion bar spring 10 is inserted into the hollow section 8a of the casing 8. The other rod-like torsion bar spring 10 is connected to the other end of the container 15.

Operation of the torsion bar spring apparatus 1 according to the present embodiment is now described with reference to the accompanying drawing.

First, description is given of operation of the torsion bar spring apparatus 1 when the magnetic fluid 11 of the second torsion bar member 6 is not excited. As shown in FIG.1, when the vehicle 3 starts rolling during a turn, force in the upward direction X acts on a tire 3a. The force in the upward direction X as shown in FIG.2 acts on the end portion 1a, accordingly. As a result, torsional force occurs in the first torsion bar members 5, namely the rod-like torsion bar springs 10 (see FIG.3A). This torsional force is transmitted to the plate-like torsion bar spring 9 (see FIG.3A), which is connected to the rod-like torsion bar spring 10. Because the end of the plate-like torsion bar spring 9 is connected to the casing 8 (see FIG.3A), the torsional force twists the rod-like torsion bar springs 10 and the plate-like torsion bar spring 9. Because at this moment the magnetic fluid is not excited, it retains fluidity. In this way, the plate-like torsion bar spring 9 is twisted in the hollow section 8a of the casing 8 free from effect of the magnetic fluid 11.

On the other hand, the rod-like torsion bar springs 10 and the plate-like torsion bar spring 9 generate restoring force which resists the force acting in the upward direction X on the end portion 1a. As a result, because the force acting in the upward direction X on the tire 3a is relaxed, rolling of the vehicle 3 is restricted.

Next, description is given of operation of the torsion bar spring apparatus 1 when the magnetic fluid 11 of the second torsion bar member 6 is excited.

As shown in FIG.3B, when the coil 12 of the second torsion bar member 6 is supplied with current I by a power supply (not shown), the magnetic flux MF is induced in the hollow section 8a in which the magnetic fluid 11 is charged. In this way, the magnetic fluid 11 in the hollow section 8a is excited and hardened.

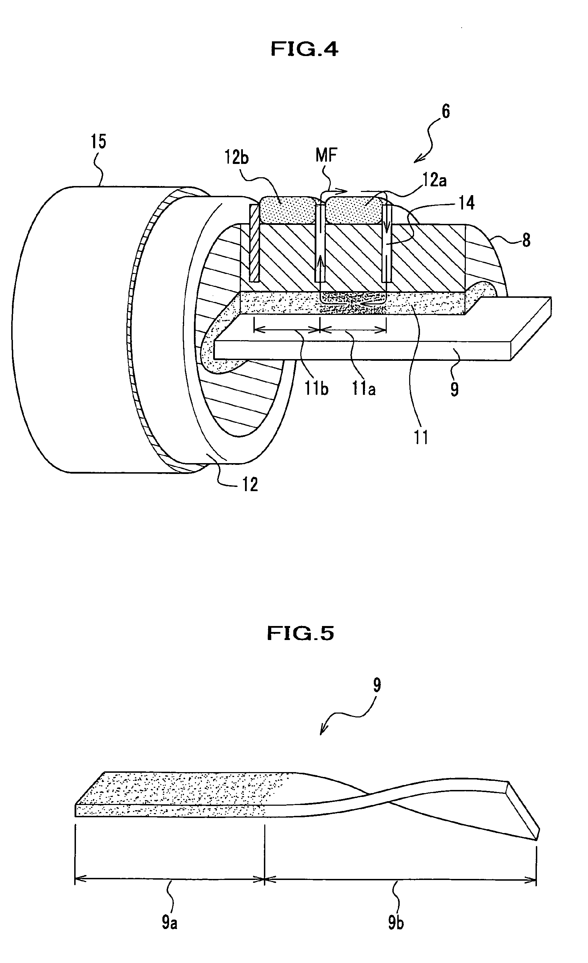

As shown in FIG.4, description is given of a case where a coil 12a is supplied with current I (see FIG.3B) but a coil 12b is not. Because the separators 14 are made of magnetic material, when the coil 12a is supplied with the current I, the magnetic flux MF excited in the hollow section 8a forms a loop including the separators 14 and the magnetic fluid 11, because the separators 14 are made of magnetic material. On the other hand, the coil 12b, which is not supplied with the current I, does not induce the magnetic flux MF. In this way, the magnetic fluid 11 has two different sections, a hardened section 11a and a non-hardened section 11b.

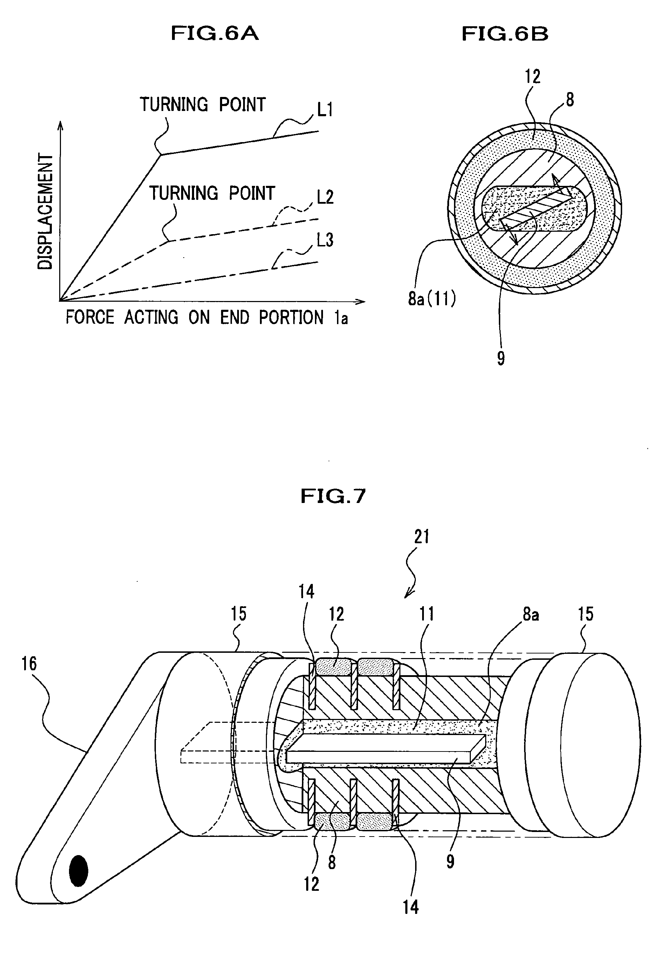

Suppose torsional force acts on the plate-like torsion bar spring 9 in the second torsion bar member 6 in the same manner as that described above. As shown in FIG.5, a portion 9a which is surrounded by the hardened section 11a is not twisted but only a portion 9b surrounded by the non-hardened section 11b is twisted. In this way, if a ratio between the hardened section 11a and the non-hardened section 11b is adjusted by controlling the number of coils 12 which are supplied with the current I, it is possible to gradually vary the spring rate of the second torsion bar member 6. Therefore, the torsion bar spring apparatus 1, which has the second torsion bar member 6, is able to gradually control restoring force when the force acts in the upward direction X on the end portion 1a of the torsion bar spring apparatus 1.

When the force in the upward direction X acts on the end portion 1a of the torsion bar spring apparatus 1, the graph shown in FIG.6A relates the force and the displacement. As shown in FIG.6A, when the magnetic fluid 11 is not excited or hardened (see L1 in FIG.6A), displacement of the torsion bar spring apparatus 1 according to force acting on its end portion 1a is great until the displacement reaches the turning point to be described later, because the plate-like torsion bar spring 9 is twisted free from effect of the magnetic fluid 11. In contrast to this, when the magnetic fluid 11 is partially excited and hardened (see L2 in FIG.6A), displacement is smaller until the turning point compared with displacement L1, because the plate-like torsion bar spring 9 located in the hardened section 11a (see FIG.4) is not twisted.

Now description is given of the turning point. The displacement of the plate-like torsion bar spring 9, which is twisted in the hollow section 8a of the casing 8, increases as force acting on the end portion 1a of the torsion bar spring apparatus 1 increases. As shown in FIG.6B, once the plate-like torsion bar spring 9 hits a wall of the hollow section 8a, namely the casing 8, its displacement does not increase any more even if the force acting on the end portion 1a increases. As a result, the displacement of the torsion bar spring apparatus 1 is dominantly dependent on that of the rod-like torsion bar spring 10. This results in a decrease in the displacement of the torsion bar spring apparatus 1 according to the force acting on the end portion 1a. In other words, the tuning point represents a point where the gradient of the displacement of the torsion bar spring apparatus 1 starts to decrease as a result of the plate-like torsion bar spring 9 hitting the casing 8.

When all the magnetic fluid 11 is excited and hardened (see L3 in FIG.6A), only the rod-like torsion bar springs 10 are twisted because the plate-like torsion bar spring 9 is not twisted. As a result, the displacement of the torsion bar spring apparatus 1 according to the force acting on its end portion 1a is smaller than the displacement L1 and L2. In this connection, because the plate-like torsion bar spring 9 is not twisted, the displacement does not have a turning point.

It is known from FIG.6A that the torsion bar spring apparatus 1 according to the present embodiment is able to provide a greater spring rate by introducing hardening of the magnetic fluid 11 by excitation.

Because the torsion bar spring apparatus 1 is able to return to its original position by its own restoring force when the vehicle 3 starts straight traveling after a turn, it is not necessary to mount a hydraulic rotary actuator on the vehicle 3, which has been equipped for a conventional stabilizer. The torsion bar spring apparatus 1, which does not create a weight increase, is able to achieve a better mileage for the vehicle 3. Because the torsion bar spring apparatus 1 does not require a hydraulic rotary actuator, it does not complicate control for a stabilizer.

The torsion bar spring apparatus 1 introduces hardening of the magnetic fluid 11 so that the spring rate of the second torsion bar member 6 is adapted to be variable. Furthermore, the torsion bar spring apparatus 1 is able to gradually increase the spring rate by controlling a ratio of hardening for the magnetic fluid 11, thereby allowing a refined balance between restriction for rolling of the vehicle 3 and realization of comfortable driving.

While the invention has been described in detail and with reference to specific embodiments thereof, it will be apparent to one skilled in the art that various changes and modifications can be made therein without departing from the spirit and scope thereof. For example, though the plate-like torsion spring 9 is connected to the rod-like torsion spring 10 in the torsion bar spring apparatus 1 according to the present embodiment, the present invention is not limited to this but it is possible to select a torsion bar spring apparatus described below.

This torsion bar spring apparatus has a second torsion bar member which is the same as the second torsion bar member 6 (see FIG.3) of the torsion bar spring apparatus 1 according to the embodiment described above except for the following points. An arm member to be described later instead of the rod-like torsion bar spring 10 is attached to one end of the plate-like torsion bar spring 9, and the other end, which is connected to the casing 8 in the embodiment described above, is modified to be free.

As shown in FIG.7, in a torsion bar spring apparatus 21, a plate-like torsion spring 9, to which an arm member 16 is attached, extends into a hollow section 8a of a casing 8. The arm member 16 is attached to one end of the plate-like torsion bar spring 9 so that a plane of the arm member 16 intersects a plane of the plate-like torsion bar spring 9.

In the torsion bar spring apparatus 21, the plate-like torsion bar spring 9 is twisted when the arm member 16 pivots about a longitudinal axis of the plate-like torsion bar spring 9. In addition, when the magnetic fluid 11 is excited by the coils 12, a spring rate of the torsion bar spring apparatus 21 is adapted to be variable in the same manner as that of the embodiment described above.

The torsion bar spring apparatus 21 according to the present embodiment can be mounted to an active stabilizer, for example. In this case, the arm member 16 of the torsion bar spring apparatus 21 should be attached to a suspension arm of the active stabilizer and a free side of a container 15 should be attached to its drive system.

Because the torsion bar spring apparatus 21 can be applied to a mechanism, which receives vertical movement with the arm member 16, such as the active stabilizer described above, it is possible to achieve versatility of a torsion bar spring apparatus according to the present invention.

A torsion bar spring apparatus (1) is provided, which includes a first torsion bar member (5) having a constant spring rate and a second torsion bar member (6). The second torsion bar member is connected to the first torsion bar member and a spring rate of the second torsion bar member is adapted to be variable.

## Claims

1. A torsion bar spring apparatus (1) comprising:
a first torsion bar member (5) having a constant spring rate; and
a second torsion bar member (6),
wherein the second torsion bar member is connected to the first torsion bar member and a spring rate of the second torsion bar member is adapted to be variable.

2. An apparatus according to claim 1, wherein the first torsion bar member comprises a rod-like torsion bar spring (10) and wherein the second torsion bar member comprises:
a casing (8) having a hollow section (8a);
a plate-like torsion bar spring (9) which is inserted into the hollow section and extends thereinto, one end of the plate-like torsion bar spring being connected to the rod-like torsion bar spring;
a magnetic fluid (11) charged in the hollow section; and
an excitation device for exciting the magnetic fluid.

3. An apparatus according to claim 2, wherein the excitation device comprises a plurality of coils (12) and the coils are disposed around the casing in a longitudinal direction of the plate-like torsion bar spring extending into the hollow section.

4. A torsion bar spring apparatus (1) comprising:
a casing (8) having a hollow section (8a) ;
a plate-like torsion bar spring (9) which is inserted into the hollow section and extends thereinto;
an arm member (16) which is attached to one end of the plate-like torsion bar spring so that a plane of the arm member intersects a plane of the plate-like torsion bar spring;
a magnetic fluid (11) charged in the hollow section; and
an excitation device for exciting the magnetic fluid.
